# EUROPEAN PATENT APPLICATION

(11) **EP 0 873 032 A1**
(43) Date of publication of application: **21.10.1998**
(21) Application number: 97302533.1
(22) Date of filing: 14.04.1997
(51) Int. Cl.: H04Q 7/38

(54) **Authentication system for a mobile telephone**

(71) Applicant: HARRIS CORPORATION, Melbourne, Florida 32919 (US)
(72) Inventor: Parminder, Singh Sikand, San Rafael, California 94903 (US); Henel, John Bradford, Richmond, California 94805 (US); Robb, Steven Michael, Petaluma, California 94954 (US)
(74) Representative: van Berlyn, Ronald Gilbert

(57) **Abstract**

Increased security for a mobile telephone system is provided by assigning each mobile telephone unit or authorized user thereof a caller authentication number (CAN) different than the caller line identification (CLI) that is normally assigned to all mobile telephone units. A verification unit added to the conventional mobile telephone system determines whether the combination of the CLI and the CAN identify an authorized user of the system and completes connection of the switching office to the telephone exchange if the CAN and CLI identify an authorized user. The CAN may be transmitted from the caller mobile telephone unit in response to a request from the verification unit, and may be transmitted on a frequency different than the signal frequency, such as the voice frequency.

## Description

The present invention relates to telecommunication systems, and to a system establishing identity of a user of a caller mobile telephone unit.

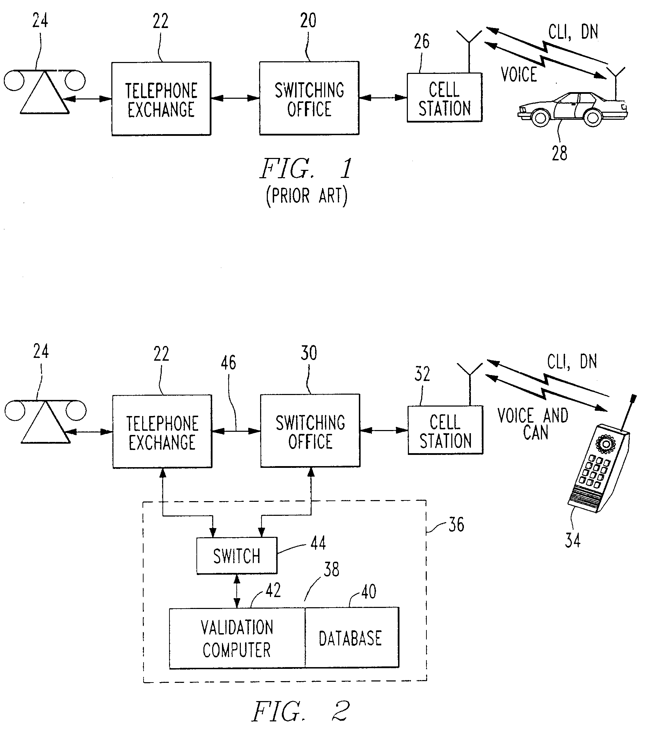

Mobile telephones, for example, are telephones such as automobile mounted telephones, hand-carried portable telephones that communicate via radio and are connected to a telephone exchange through an intermediate station. Such systems are disclosed in the specification of U.S. Patent number 4,829,554. Figure 1 illustrates, a switching office 20 connects the mobile telephone system to a telephone exchange 22 and its subscribers 24. The switching office 20 communicates with cell stations 26 that communicate with mobile telephone units 28 in their respective areas. Communication between the cell stations 26 and the switching office 20, and between the switching office 20 and the telephone exchange 22 may be by any conventional means, such as land line or radio. Communication between the mobile telephone units 28 and the cell stations 26 is typically via radio.

Radio communication between the cell stations 26 and the mobile telephone units 28 may use two sets of frequencies, one for establishing the communication link (the signal frequency) and one set for communicating (the voice frequency). Full duplex communications between a mobile unit 28 and a cell station 26 may require signals having two different frequencies, or one frequency set. The cell stations 26 and mobile telephone units 28 may operate on one or more sets of predetermined signal frequencies (e.g., F1 - F8) and on one or more of a set of predetermined voice frequencies (e.g., F9 - F40). Each of the cell stations 26 may use only some of the frequencies in the set of signal frequencies to avoid interference from nearby cells, with the mobile telephone unit monitoring the entire set of signal frequencies.

Each mobile telephone unit 28 is provided with a caller line identification (CLI) that does not change (in contrast to the telephone number of the mobile telephone unit that may change). The CLI may be used for various administrative purposes, including signaling the mobile telephone unit, authorizing use of the mobile telephone system and billing.

The protocol for placing a telephone call with a mobile telephone unit typically includes an exchange of signals with a cell station on a signal frequency, followed by establishment of voice communication on a voice frequency. For example, the protocol may be as follows:
Cell A broadcasts - "I am signaling on signal frequency F1."
Mobile unit B - Notes signal frequency F1 for Cell A.
Mobile unit B to Cell A on signal frequency F1 - "Place call to dialing number 555-1234 (DN in the figures), my CLI is xxxx."
Cell A to CLI (Mobile unit B) on signal frequency F1 (after verifying that the CLI is authorized) - "Use voice frequency F20." Cell A also establishes a communications link between the mobile unit 28 and the telephone exchange.
Mobile unit B communicates with subscriber at dialing number 555-1234 through Cell A using voice frequency F20.

This protocol relies on a single means of identification, the CLI. It provides entry into the mobile telephone system and provides a means of billing. Unfortunately, the CLI also is the weak link in the security of the system. A listener with appropriate radio receiving equipment can steal a CLI and use the CLI to obtain free, unauthorized access to the mobile telephone system.

Mobile telephone systems that use this protocol are widespread with the considerable capital expenditures. It is has not been apparent how security can be increased without costly changes to the existing systems.

An object of the present invention is to provide a telecommunication system that obviates known problems and increases the level of security and to provide a mobile telecommunication systems that employs a caller authentication number that, when used with the existing CLI, identifies an authorized user of the caller mobile telephone unit.

A further object is to provide a mobile telecommunication authentication system that employs two identifiers, one that is automatically transmitted on a first frequency, and one that is selectively transmitted on a second frequency, and employs a caller authentication number that is transmitted on the voice frequency using a sequence of DTMF tones in response to a request for further identification, and furthermore increases the security of the cellular telephone system.

The present invention includes a telecommunication system with mobile telephone units, arranged to establish telecommunication between a telephone in a telephone exchange and a mobile telephone unit, comprising several mobile telephone units provided with a caller line identification (CLI) automatically transmitting from any caller mobile telephone units to identify the caller mobile telephone unit, the system having a caller authentication number (CAN) for each mobile telephone unit that is selectively transmitted from the caller mobile telephone unit to identify the caller mobile telephone unit, a switch adapted to receive the dialed number, said CAN and the CLI from the caller mobile telephone unit, so as to provide the dialed number to the public telephone exchange, a comparator for determining whether said CAN and the CLI identify the caller mobile telephone unit, in the event said CAN and the CLI identify an authorized user, for allowing said switch to complete the call to the dialed number, and in the event said CAN and the CLI do not identify an authorized user, for not allowing said switch to complete the call to the dialed number, with the CLI CAN transmitted on selective and predetermined but different frequencies, and the CLI being transmitted on a signal frequency and said CAN transmitted on a voice frequency, incorporating a central switching station in which said switch and said comparator are located. Said comparator being located remotely and also to determine whether the user of the mobile telephone unit is authorized to establish telephone communications with the dialed number, in which said CAN comprises a predetermined sequence of at least three DTMF tones, said comparator comprises a database remote from said switch, in which the CLI and said CAN are transmitted selectively in different signalling formats, so that the CLI is transmitted in digital format and the CAN is transmitted in DTMF format.

The invention will now be described, by way of example, with reference to the accompanying drawings in which:
Figure 1 is a block diagram of a mobile telephone system of the prior art.
Figure 2 is a block diagram of a mobile telephone system incorporating an embodiment of the present invention.

The present invention provides increased security to a telecommunication system by assigning an authorized user of a mobile telephone unit a caller authentication number (CAN) that is different than the caller line identification (CLI), and by adding a verification unit for determining whether the CLI and the CAN identify an authorized user of the system.

Figure 2 illustrates, a mobile telecommunication system having a switching office 30 communicating with a telephone exchange 22 and subscribers 24. The switching office 30 communicates with cell stations 32 that communicate with mobile telephone units 34 in their respective areas. The switching office 30 receives the CLI and dialed number DN from the cell station 32 and passes the CLI to a verification unit 36 that prompts the user of the caller mobile telephone unit 34 to insert the CAN. The CAN is provided to the verification unit 36 and with the CLI is verified against a database of authorized CAN and CLI combinations. If the CAN and CLI identify an authorized caller, the verification unit 36 allows the switching office to complete the connection with the telephone exchange 22. The CLI may be transmitted on the signal frequency, as discussed above, and the CAN may be transmitted on a different frequency, such as the voice frequency.

The CAN may be any appropriate code that may be entered at the caller mobile telephone unit 34. For example, the CAN may be a predetermined sequence of numbers, letters, or symbols, such as three or more dual tone multiple frequency (DTMF) tones. The type of signal and number of numbers, letters or symbols may be selected for ease of entry and security. When prompted by the verification unit 36, the user of the caller mobile telephone unit may enter the CAN on the keypad of the mobile telephone unit 34 to access the mobile telephone system.

The verification unit 36 desirably interfaces with the existing mobile telephone system so that major changes to the system are not required. It may include a comparator 38 that evaluates whether the CLI and CAN identify an authorized user of the caller mobile telephone unit. To this end, a database 40 and computer 42, or other appropriate data access and retrieval system, may be included in the comparator 38. The comparator 38 may provide instructions to a switch 44 that allows the switching office 30 to communicate with the telephone exchange 22, thereby connecting the subscriber 24 and caller mobile telephone unit 34. The switch 44 may be used to carry all traffic between the switching office 30 and the telephone exchange 22 or may enable a direct link 46 therebetween once the user of the caller mobile telephone unit has been identified as authorized.

Present day systems typically verify the CLI of the calling party to ensure that the caller mobile telephone unit is authorized access to the cellular system. Thus, most if not all of the hardware components for the improved security system of the present invention exist in present systems. The use of the CAN substantially complicates the task of a would-be thief of telephone service. A thief who stole a mobile telephone unit (such as by stealing the automobile carrying the mobile telephone unit or by stealing the unit) would have a unit which automatically transmits an authorized CLI, but would not know the CAN. Electronic thieves who intercept only the CLI on the signalling channel are similarly thwarted. To succeed in stealing the full authorized codes, an electronic thief would have to (a) detect the CLI embedded in the digital signal on the signalling channel; (b) determine which of the many voice channels was to be used by the unit with the specified CLI; and, (c) detect the analog, DTMF tones coming from the unit with the specified CLI over one of the many voice channels.

The switch 44 may be any conventional switch suitable for the purpose, and in a preferred embodiment is a Harris Corporation Integrated Network Platform switch sold under the registered trade mark HARRIS 20-20. The computer 42 may be any conventional computer suitable for the purpose, such as an IBM PC-AT or the like.

In an embodiment of the present invention, the protocol for placing a telephone call with a mobile telephone unit includes an exchange of signals with a cell station on a signal frequency, transmission of the CAN on a voice frequency, followed by establishment of voice communication on the voice frequency. The protocol may be as follows:
Cell A broadcasts - "I am signaling on signal frequency F1."
Mobile unit B - Notes signal frequency F1 for Cell A.
Mobile unit B to Cell A on signal frequency F1 - "Place call to dialing number 555-1234 (DN in the figures), my CLI is xxxx."
Cell A to CLI (Mobile unit B) on signal frequency F1 - "Use voice frequency F20."
Verification unit A to which Cell A is attached prompts Mobile unit B, using Cell A and signal frequency F1 - "Provide your CAN"
Mobile unit B responds on voice frequency F20 - "My CAN is yyyy."
Verification unit A checks that CLI "xxxx" and CAN "yyyy" identify an authorized user of Mobile unit B.
If the user of Mobile unit B is authorized, Cell A establishes a communications link with the telephone exchange.
Mobile unit B communicates with subscriber at dialing number 555-1234 through Cell A using voice frequency F20.
If Mobile unit B is not positively identified, Cell A does not establish communications with the telephone exchange and Mobile unit B may be informed that the call cannot be made.

The prompt from the verification unit to the caller mobile telephone unit to provide the CAN may be a verbal message or one or more tones that the user will be able to identify as a request to provide the CAN. In the event that an improper access is attempted, or a predetermined number of improper attempts to obtain access are made within a certain time period, the cell station 26 or validation computer 42 may stop all further processing of calls from the CLI until additional certification is obtained that the mobile unit is in authorized hands.

In an alternative embodiment, the CAN may be transmitted on the signal frequency, although the risk of interception and theft may be higher than when separate frequencies are used.

The verification unit 36 may be near or in the switching office 30, or may be remote therefrom and accessible by a secure communication link. Portions of the verification unit 36, such as the database 40, may be separated from the remaining portions so that a central database may serve more than one switching office to avoid duplication of data entries. Alternatively, plural databases 40 may be connected to a central data exchange that updates all of the databases 40 when information is provided to any one of the databases 40.

The verification unit 36 may also be used to screen dialed numbers and to determine whether the user of the caller mobile telephone unit is authorized to be connected to the dialed number. For example, in the protocol described above, the dialed number may be forwarded with the CLI and the CAN to verification unit 36 to determine whether the dialed number is on a list of proscribed numbers that may be stored in database 40 under the CLI. If the dialed number is on such a list, the call may be treated in the same manner as if the CLI and CAN did not identify the caller mobile telephone unit.

Plural CANs may be associated with one CLI to permit several different users to make calls from the same mobile telephone unit but with different billing and/or permitted call types and access.

Increased security for a mobile telephone system is provided by assigning each mobile telephone unit or authorized user thereof a caller authentication number (CAN) different than the caller line identification (CLI) that is normally assigned to all mobile telephone units. A verification unit added to the conventional mobile telephone system determines whether the combination of the CLI and the CAN identify an authorized user of the system and completes connection of the switching office to the telephone exchange if the CAN and CLI identify an authorized user. The CAN may be transmitted from the caller mobile telephone unit in response to a request from the verification unit, and may be transmitted on a frequency different than the signal frequency, such as the voice frequency.

## Claims

1. A telecommunication system with mobile telephone units, arranged to establish telecommunication between a telephone in a telephone exchange and amobile telephone unit, comprising several mobile telephone units provided with a caller line identification (CLI) automatically transmiting from any caller mobile telephone units to identify the caller mobile telephone unit, the system having a caller authentication number (CAN) for each mobile telephone unit that is selectively transmitted from the caller mobile telephone unit to identify the caller mobile telephone unit, a switch adopted to receive the dialed number, said CAN and the CLI from the caller mobile telephone unit, and for providing the dialed number to the public telephone exchange, a comparator for determining whether said CAN and the CLI identify the caller mobile telephone unit, in the event said CAN and the CLI identify an authorized user, for allowing said switch to complete the call to the dialed number, and in the event said CAN and the CLI do not identify an authorized user, for not allowing said switch to complete the call to the dialed number, with the CLI CAN transmitted on selective and predetermined but different frequencies, and the CLI being transmitted on a signal frequency and said CAN transmitted on a voice frequency, incorporatin a central switching station in which said switch and said comparator are located. Said comparator being located remotely and also to determe whether the user of the mobile telephone unit is authorized to establish telephone communications with the dialed number, in which said CAN comprises a predetermined sequence of at least three DTMF tones, said comparator comprises a database remote from said switch, in which the CLI and said CAN are transmitted selectively in different signalling formats, so that the CLI is transmitted in digital format and the CAN is transmitted in DTMF format.

2. A telecommunication system including a call authenticator comprising a first caller identifier that is automatically transmitted on a first frequency from a caller mobile telephone unit, a second caller identifier that is selectively transmitted on a second frequency from the caller mobile telephone unit, with said first and second caller identifiers identifying an authorized user of the caller mobile telephone unit system to evaluate said first and second caller identifiers before connecting the caller mobile telephone unit to a dialed number with said first frequency being a signal frequency for establishing communications with the caller mobile telephone unit, and said second frequency is a voice frequency to communicate with the caller mobile telephone unit.

3. A telecommunication system as claimed in claim 2 wherein said means for evaluating comprises a computer for determining said first and second caller identifiers identify an authorized user of the caller mobile telephone unit, and said means for evaluation comprises a switch for connecting the caller mobile telephone unit to the dialed number responsive to the determination made by said computer, in which said means for evaluation includes means for determining whether the user of the caller mobile telephone unit is authorized to be connected to the dialed number.

4. A system as claimed in claims 1, 2 or 3 characterized by caller identification in a mobile telecommunication system comprising means for transmitting a first identifier automatically from a mobile telephone unit on a first frequency during initiation of a communication link with the mobile telephone unit and for transmitting a second identifier selectively from the mobile telephone unit on a second frequency.

5. A process for a telecommunication system arranged to connect a caller mobile telephone unit to a telephone exchange, each mobile telephone unit having a caller line identification (CLI) that is automatically transmitted from the caller mobile telephone unit the steps of the process comprsing a user of the caller mobile telephone unit with a caller authentication number (CAN), the arrangement of the CLI and the CAN to identify an authorized user of the caller mobile telephone unit, selectively transmitting the CAN from the caller mobile telephone unit to identify the user of the caller mobile telephone unit so as to connect the caller mobile telephone unit to a telephone exchange, to determine whether the CAN and the CLI identify an authorized user of the caller mobile telephone unit, and in the event the CAN and the CLI identify an authorized user of the caller mobile telephone unit, to connect the caller mobile telephone unit to the telephone exchange.

6. A process as claimed in claim 5 wherein the CAN and the CLI are transmitted on different frequencies, with the CAN being transmitted on a voice frequency and the CLI is transmitted on a signal frequency, in which the step of determining whether the CAN and CLI identify an authorized user of the caller mobile telephone unit includes the step of evaluating whether the caller mobile telephone unit is authorized to be connected to a telephone number in the telephone exchange dialed by the caller mobile telephone unit.

7. A process for a telecommunicating system including caller identification in a mobile telephone system comprising the steps of, automatically transmitting a first caller identifier on a first frequency from a caller mobile telephone unit, selectively transmitting a second caller identifier on a second frequency from the caller mobile telephone unit, the first and second caller identifiers identifying an authorized user of the caller mobile telephone unit; and evaluating the first and second caller identifiers before connecting the caller mobile telephone unit to a dialed number to determine whether said first and second caller identifiers identify an authorized use of caller mobile telephone unit, utilizing the first frequency as a signal frequency for establishing telephone communications with the caller mobile telephone unit, and the second frequency as a voice frequency for communicating with the caller mobile telephone unit.
